(19) Europäisches Patentamt

European Patent Office

Office européen des brevets

(11) **EP 1 473 185 A2**

(12) **EUROPEAN PATENT APPLICATION**

(43) Date of publication:
**03.11.2004 Bulletin 2004/45**

(51) Int Cl.7: **B60K 28/14**

(21) Application number: **04250895.2**

(22) Date of filing: **01.03.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK**<br><br>(30) Priority: **03.04.2003 JP 2003100419**<br><br>(71) Applicant: **Kabushiki Kaisha Haradakuni**<br>**Hiroshima-shi, Hiroshima (JP)** | (72) Inventor: **Harada, Kunio**<br>**Hiroshima-shi Hiroshima (JP)**<br><br>(74) Representative: **Sutcliffe, Nicholas Robert et al**<br>**Mewburn Ellis LLP**<br>**York House,**<br>**23 Kingsway**<br>**London WC2B 6HP (GB)** |

(54) **Drive system changing device and method/program thereof**

(57)     A drive system changing device actuated in an emergency operation is characterized by having a vehicle speed detecting means (5) for detecting a vehicle speed before a deceleration; a deceleration detecting means (6) for detecting a negative acceleration due to a sudden braking; a steering angle detecting means (7) for detecting a steering angle when a sudden operation is performed in the sudden braking; a determination means (3) for determining whether or not to change a drive system from a result obtained from each of the above detecting means (5,6,7); a driving force separating means (2) for changing a four wheel drive system to front/rear wheel drive systems by separating a part of driving force transmitting unit of the four wheel drive system according to a determination of the determination means (3); and a drive system returning means (2) for returning the drive system changed to the front/rear wheel drive systems after the emergency operation by the separating means to the four wheel drive system.

FIG.1

**Description**

The present invention relates to a drive system changing device of a four wheel drive vehicle, and in more particular, relates to the drive system changing device to enhance running stability in emergency operations such as sudden braking and sharp turning.

Although conventionally to improve safety in emergency operations such as sudden braking and sharp turning of an automobile and an accident, for example, a safety measure such as an antilock brake system (ABS) and air bag are taken, casualties due to traffic accidents show no sign of significant decline notwithstanding these safety measures being implemented. The National Highway Traffic Safety Administration (NHTSA) indicates that especially sport utility vehicles (SUVs) having a four wheel drive system (4WD: four wheel drive) have a higher ratio of roll-overs (not less than 60 percent of SUV accidents accompany roll overs) compared with ordinary vehicles, and moreover, the ratio of SUV passengers being killed by roll-over accidents is as about three times as high as that of the ordinary vehicle.

Many automobiles are lighter at their rear portions of their structures with engines and the like being placed at front portions of the vehicles, thereby the front portion being heavier, and adopt a system which drives the rear wheels (FR: Front engine Rear drive) or alternatively a system which drives the front wheels (FF: Front engine Front drive), and then many SUVs adopt a 4WD.

Because the ordinary vehicle is, as described above, heavier at the front portion and is lighter at the rear portion of its structure, a phenomenon in which the vehicle rear portion is swung by inertial force in a front direction and lateral direction making front wheels of the vehicle a base point is difficult to occur even in emergent operations if the rear portion is in a lighter state. But when there are many passengers and a weight of cargo on board is heavier, the vehicle rear portion becomes heavier, so the phenomenon in which the vehicle rear portion is swung by inertial force in the front direction and lateral direction making the front wheels of the vehicle the base point can easily occur. This is one of the factors in spins and roll-overs.

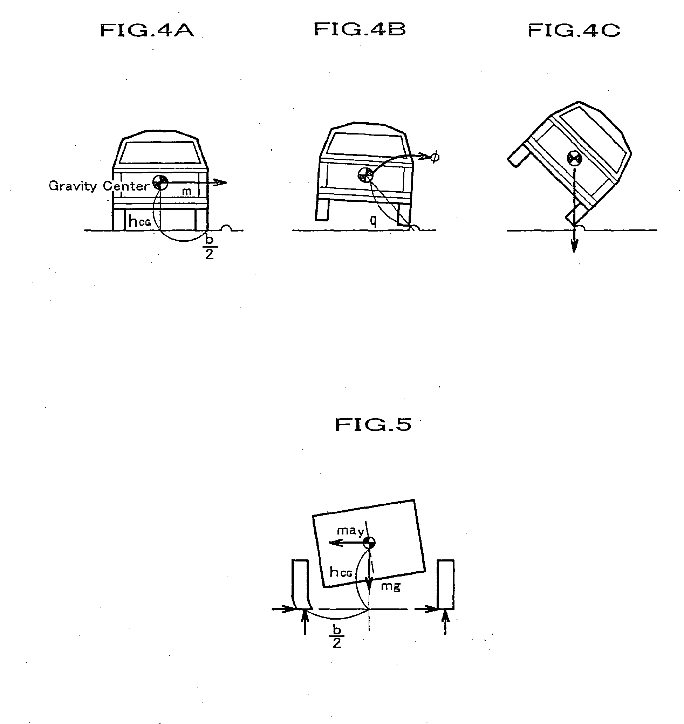

Here, considering roll-overs, these can be generally classified into tripped roll-overs and handling roll-overs. Being described by a simple mechanism, the tripped roll-over occurs as shown in FIGS 4A to 4C by impact force changing to angular momentum when a vehicle with a lateral speed hooks a tire on an obstacle such as a curb stone. For example, when the impact force of a vehicle with a mass m and gravity center $h_{cg}$ laterally sliding at a speed $V_y$ is converted to angular momentum, it can be expressed in an equation (1) described below (see FIGS. 4A and 4B):

$$mq^{2}*\phi=mv_{y}h_{cg}, \qquad (1)$$

where m is the mass of a vehicle, $V_y$ is a lateral sliding speed, $h_{cg}$ is a height of gravity center of the vehicle, q is a distance between a position of the gravity center and tire, and $\phi$ is an angle in the case that the position of gravity center of the vehicle is converted to a rotation movement.

In addition, a condition of the roll-over in the case can be expressed in an equation (2) described below (see FIG. 4C):

$$mg(q-h_{cg})<(mq^{2}*\phi^{2})/2, \qquad (2)$$

where $q=\sqrt{(h^{2}_{cg}+(b/2)^{2})}$ and g is gravitational acceleration.

On the other hand, handling roll-overs happen when very large rapid steering is performed on a dry flat road and emergency operations are performed. Handling roll-overs often happens in SUVs with comparatively high centers of gravity, and can easily occur when a double change and J turn (step steering with a large steering angle and angular rate) are performed at a high speed running in a high way and the like.

As a specification relating to these roll-overs, a ratio of a tread width and center of gravity height (b/$h_{cg}$) exists and a condition of the roll-over in the case can be expressed in an equation (3) described below (see FIG. 5):

$$b/2h_{cg}<ma_{y}/mg, \qquad (3)$$

where b is a width of a tread and $a_y$ is a speed in a traveling direction of a vehicle. The tread is a center distance (meter) of left/right tread contacting surfaces with a road surface, that is, a distance between wheels.

In other words, in the above equations (2) and (3) when left part values are greater than right part values, roll-over does not happen, but when the right part values exceed the left part values, roll-overs happen. Out of the roll-overs, it is very difficult to prevent a tripped roll-over, because various occurrence factors such as an accident, snowy road, and muddy road normally contribute; however, it is thought that an occurrence of the handling roll-over can be restrained or reduced by a measure of some kind being taken.

Here, one of the causes of handling roll-overs in SUVs with 4WD is considered. Usually, when an automobile turns, rotation differences arise between the four tyres, so a differential gear is provided in order to eliminate such rotation differences and lighten the load on each tyre. In the differential gear, there is generally a front differential gear to eliminate a rotation difference between front wheels and a rear differential gear to eliminate a rotation difference between rear wheels. In addition, especially in a 4WD vehicle (more especially full-time 4WD vehicle), because a rotation difference may occur in turning, running on a bad road, and the like between front and rear wheels, a center differential gear is adopted to eliminate this.

To actuate each differential gear, a resistance has to occur between the tyres and a road surface, so if the rotation difference between the front and rear wheels is eliminated by the center differential gear being provided, a tyre load is produced which it would be desirable to alleviate. For a vehicle body exceeding one tonne running at a high speed, the resistance inside the differential gear to eliminate the rotation difference can cause a big load for the tyres in question.

In addition, in full-time 4WD, because the drive system is mechanically connected, driving force from an engine is also transmitted to each tyre even during braking.

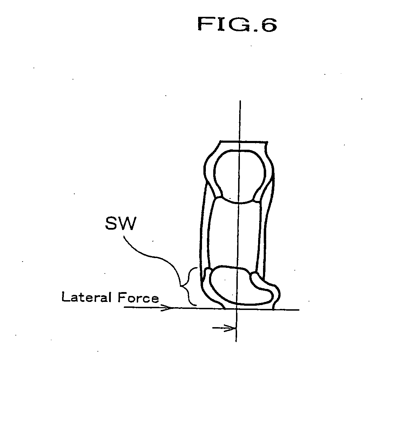

Especially, because many SUVs have tyres with high side walls (SW), a big load is given to an outer front tyre in turning due to the tyre load and driving force described above when emergency operations accompanying a sudden braking and sudden steering operation are performed. When such a load exceeds the strength of side wall SW of the outer front tyre in turning, the tyre shape instantaneously distorts to a large extent and results in a state of an abnormal deformation (see FIG. 6). In such an abnormally deformed state, the vehicle becomes inoperable, and in the worst case, it results in the handling roll-over described above.

But even in such an SUV, if passengers are few and/or the weight of cargo on board is light (i.e. the front portion being heavier and the rear portion being lighter) even in the case of the emergency operations at high speed, the vehicle weight is comparatively light, thereby the load on the outer front tyre during turning is comparatively light, and it is difficult to produce the abnormal deformed state such as that shown in FIG. 6. Therefore, it is statistically known that roll-over accidents due to handling roll-overs do not occur as much. In other words, it can be said that handling roll-overs especially described above tend to occur when the emergency operations are performed at high speed in a state with many passengers and/or when the weight of cargo on board is heavier (i.e. a state in which the rear portion of the vehicle is heavier).

On the other hand, in FF vehicles and FR vehicles, because the driving force is not connected between the front and rear wheels, the specific problem for 4WD does not occur and it is difficult to cause the abnormal deformation of the outer front tyre in turning described above, thereby the number of handling roll-over accidents are few even when the passengers are more and the weight of cargo on board is heavier.

That is, even when the passengers are more and the weight of the cargo on board is heavier, it is thought that the safety is improved if the 4WD is temporarily changed to a front wheel 2WD and rear wheel 2WD (2WD: two wheel drive) in emergency operations.

A method of temporarily changing 4WD to front wheel 2WD and rear wheel 2WD, a so called part-time 4wd system, which is changed by manual control and another system which is changed by electronic control (for example, see Japan patent laid open publication 5-131856) are known.

However, the system changed by electronic control in the above Japanese patent is a driving force distribution controller of a four wheel drive vehicle which usually drives with two wheels of the FF and FR, and electronically controls a transmission torque to other wheels making one set of the front/rear wheels a drive base when front tyres and rear tyres other than driven wheels tend to slip. When such a system performs an acceleration turn and the like whilst running in 2WD, and when a movement condition of the vehicle reaches a limit alarm region, the drive system is made 4WD, whereby improvement of a limit foreseeing ability and limit controllability is achieved regardless of variations in the friction coefficient of a road surface. The system is not intended to change the 4WD to the 2WD of the FF and FR in emergency operations.

For 4WD SUVs, in order to enhance the safety in emergency operations, it is thought that improvement of tyre durability, braking performance, and some other measures also may be necessary.

The present invention preferably addresses one or more of the problems described above, and an object is preferably to provide a drive system changing device which temporarily changes an automobile (vehicle) running with a four wheel drive system to a front wheel drive system and rear wheel drive system in emergency operations.

The present inventor has discovered that roll-over accidents due to the handling roll-over can be prevented or reduced by temporarily changing a four wheel drive (4WD) system to a front wheel drive (FF) system or a rear wheel drive (FR) system in emergency operations of a vehicle running a 4WD system, and has thus arrived at the present invention.

In the present description, the term "emergency operations" includes performing sudden braking and steering operations and can be described by the speed, time, steering angle, and the like occurring in the emergency operations. In addition, the term "sudden braking" includes performing a sudden braking operation by use of a brake. The term "in sudden braking" means the time during which acceleration exceeds a negative threshold as a result of a sudden braking operation (the negative threshold may be, for example, -0.8 to -1.0 G). To detect such the threshold, for example, a G sensor and/or a speedometer of the vehicle can be used. Moreover, the term "sudden steering" includes an operation in which a steering angle of front tyres in relationship to the speed becomes over a constant angle as a result of a steering operation, particularly in the present invention, the steering angle at which the front tyres abnormally deforms whilst performing a sudden steering operation at a certain speed may be made an upper limit, and the steering angle is measured by an experiment or the like at a plurality of speeds and such angles thereby being able to be defined as an alarm range. Still furthermore, the term "after emergency operations" means a state in which either or both of the sudden braking and sudden steering operations are judged to have been performed and completed. In addition, the term "prescribed weight" means, for example, a dry weight of a weight described in a vehicle inspection certificate, and the term "weight in running" can mean a weight identified at a start of an engine and that identified as needed in running, that is, a weight in which the weight of passengers, weight of cargo on board, fuel, and other devices are added to the prescribed weight.

A first aspect of the invention provides a drive system changing device which is actuated in emergency operations and is characterized by having a vehicle speed detecting means for detecting a vehicle speed before a start of deceleration; a deceleration detecting means for detecting a negative acceleration due to sudden braking; a steering angle detecting means for detecting a steering angle when a sudden steering operation is performed in the sudden braking; a determination means for determining whether or not to change a drive system from a result or signal obtained from each of the vehicle speed detecting means, deceleration detecting means, and steering angle detecting means; a driving force separating means for changing a four wheel drive system to a front wheel drive system or a rear wheel drive system by separating a part of driving force transmitting unit of the four wheel drive system according to a determination of the determination means; and a drive system returning means for returning the drive system changed to the front wheel drive system or a rear wheel drive system by the determination means to the four wheel drive system after the emergency operations.

The drive system changing device of the first aspect of the invention, in emergency operations due to sudden braking and handling of a vehicle, especially on SUV, can detect the vehicle speed just before any sudden braking, then detect the negative acceleration due to the sudden braking, and also detect the steering angle when the steering wheel is operated during the sudden braking. From results of the detection of each operation, the device can determine whether or not an alarm level set in advance of the emergency operations is reached, and following this determination, when it is determined that the alarm level set in advance of the emergency operations is reached, the driving force separating device is actuated and the vehicle running in 4WD can be changed to one of FR or FF by separating the part of the driving force transmitting unit which transmits the driving force to the four wheels. In addition, because an abnormal deformation of an outer front tyre-in turning in emergency operations can be prevented or its occurrence reduced thanks to this, resulting in a prevention or reduction of roll-over occurrence and therefore an improvement of the running stability in emergency operations can be achieved. Moreover, by re-connecting the driving force transmitting unit after the emergency operations, the device system can again return the vehicle to a four wheel drive system.

A second aspect of the invention provides a drive system changing device described in the first aspect of the invention, which is characterized in that the determination means is controlled by an electronic determination device.

The second aspect of the invention allows accurate and speedy control of the drive system changing device to be performed because the control of the drive system changing device is performed by the electronic controller.

A third aspect of the invention provides, a drive system changing device described in the first aspect of the invention, further characterized by having a vehicle weight detecting means for detecting a difference between a vehicle weight in running and the prescribed vehicle weight, and a drive system change-actuation judgment means which actuates the device only when the increase in the vehicle weight detected by the vehicle weight detecting means is above a certain amount.

The third aspect of the invention enables, in the first aspect of the invention, the drive system change to be performed by the drive system changing device of the invention, as a result of detecting the vehicle weight prescribed according to the vehicle kind and the difference (e.g. increase) in the vehicle weight in running due to passengers and the like when emergency operations are performed only in the case of increased vehicle weight being more than a certain amount such as in the case that the passengers are more and a weight of cargo on board is heavier. That is, when the increase in the vehicle weight is less, the drive system change by the drive system changing device related to the invention is not performed and the emergency operations can be performed in the 4WD arrangement as is.

A fourth aspect of the invention provides a drive system changing method which is actuated in emergency operations and comprises or consists of: a vehicle speed detecting step, detecting a vehicle speed before a start of deceleration; a deceleration detecting step, detecting a negative acceleration due to a sudden braking; a steering angle detecting step, detecting a steering angle when a sudden steering operation is performed during the sudden braking; a determination step, determining whether or not to change a drive system from a result obtained from each step of the vehicle speed detecting step, the deceleration detecting step, and the steering angle detecting step; a driving force separating step, changing the four wheel drive system to a front wheel drive system or a rear wheel drive system by separating part of the driving force transmitting unit of the four wheel drive system, according to a determination of the determination step; and a drive system returning step, returning the drive system, changed to a front wheel drive system or a rear wheel drive system by the driving force separating step, to the four wheel drive system after the emergent operations.

The drive system changing method of the fourth aspect of the invention, in the emergency operations due to sudden braking and steering operations, detects each operation by a step detecting the vehicle speed just before sudden braking, then a step detecting negative acceleration due to sudden braking, and then a step detecting the steering angle when the steering wheel is operated in the sudden braking; whereby the method can determine whether or not an alarm level is reached in the emergency operations according to a predetermined criteria; and in its determination steps, when it is determined that the alarm level in the emergency operations determined in advance is reached, the method changes a vehicle running in 4WD to one running in FR or FF by the driving force separating step separating the part of driving force transmitting unit of the vehicle. In addition, because the occurrence of an abnormal deformation of an outer front tyre in turning in emergency operations can be prevented or reduced according to this, resulting in a prevention or reduction of a roll-over occurrence and an improvement of running stability in emergency operations can be achieved. Moreover, after the emergency operations the drive system returning step, connecting the driving force transmitting unit separated by the drive system separating step, allows the four wheel drive system to be returned to.

FIG. 1 is an illustration drawing showing one embodiment of a drive system changing device related to the invention.
FIG. 2 is a flowchart of a drive system changing method related to the invention.
FIG. 3 is a flowchart of a program for a drive system changing device related to the invention.
FIGS. 4A, 4B, and 4C are drawings showing appearances of a tripped roll over and its dynamic actions: FIG. 4A is a drawing in which a vehicle is laterally sliding; FIG. 4B is a drawing at an instant when a tyre has clashed an obstacle; and FIG. 4C is a drawing of the roll over proceeding.

Hereinafter, an embodiment of the present invention will be described in detail, referring to drawings as appropriate. However it goes without saying that the substance of the invention is not limited to this embodiment.

A "drive system changing device" of the invention being, for example, as described with reference to the drawings which show a drive system changing device 1, has a vehicle speed detecting means (vehicle speed detector 5: for example, a speedometer) for detecting a vehicle speed before a start of deceleration; a deceleration detecting means (deceleration detector 6: for example, a G sensor) for detecting a negative acceleration due to a sudden braking; a steering angle detecting means (steering angle detector 7: for example, a rack displacement amount detector) for detecting a steering angle when a sudden steering operation is performed during sudden braking; a determination means (electronic controller 3: for example, a microcomputer) for determining whether or not to change the drive system from a result obtained from each of the above detecting means; a driving force separating means (driving force separating device 2: for example, a clutch) for changing the four wheel drive system to a front wheel drive system and a rear wheel drive system by separating the part of the driving force transmitting unit according to a determination of the determination means (electronic controller 3); and a drive system returning means (drive force separating device 2) for returning the drive system, which has been changed to a front wheel drive system and a rear wheel drive system by the driving force separating means (driving force separating device 2), back to the four wheel drive system. Moreover, the drive system changing device may have a vehicle weight detecting means (vehicle weight detector 4: for example, a hydraulic sensor) for detecting a difference of a vehicle weight between a prescribed weight and one in running; and a drive system change-actuation judging means (electronic controller 3) for judging the driving force separating means (driving force separating device 2) to cause non actuation of the system in the case that an increase in the vehicle weight detected by the vehicle weight detecting means (vehicle weight detector 4) is less than a predetermined amount.

Although the "vehicle speed detection means" of the drive system changing device of the embodiment is not specifically limited, one example is a speedometer, which continuously detects a speed during a running state with an electronic controller continuously monitoring the speed in conjunction with the speedometer. In addition, as the "deceleration detection means", anything may be used which detects deceleration per unit time decelerated by a sudden braking operation from a running speed detected by the vehicle speed detecting means, for example, the deceleration of a vehicle may be detected in conjunction with the speedometer, and for example, to detect the deceleration by an accelerometer or G sensor. As the "steering angle detecting means", anything may be used which detects a tyre angle steered as a result of a steering operation, and for example, it can be a device which detects a steering angle of a steering wheel in the emergency operations in cooperation with the steering wheel or alternatively it can be a rack displacement amount detector detecting a displacement amount of a rack in the steering gear.

The "determination means" of the invention can judge, for example in the electronic controller which includes a program executable by the electronic controller described in detail later, by information obtained from the vehicle speed detecting means, the deceleration detecting means, and for the steering angle detecting means whether or not the information corresponds to an emergency operation, whether or not the deceleration exceeds a threshold, and whether or not the steering angle reaches an alarm level in emergency operations.

The "driving force separating means" is not specifically limited, however, for example, when the determination means (electronic controller) judges that the drive system is to be changed the following steps may occur : the driving force separating means transmits a signal to a hydraulic unit 8 from the electronic controller; actuates a clutch-like mechanism by actuating the hydraulic unit 8; and cuts the driving force from one of the front wheels and the rear wheels, thereby causing transmission of the driving force to only either two wheels at the front or at the rear. The clutch-like mechanism includes, for example, a clutch, a gear, or the like as a device having a mechanism which can cut the driving force between the front and rear wheels.

The "drive system returning means" of the drive system changing device of the embodiment can return, when the determination means determines that the emergency operations are over, the driving force cut by the clutch mechanism to the 4WD system automatically by electronic control, and the drive system can return from the FR or FF system to the 4WD system semi-automatically by a switch or the like.

As the "vehicle weight detecting means" in the drive system changing device of the invention, anything may be used which can detect a vehicle weight and it is not specifically limited. Particular examples are means for calculating an attenuation value due to the sinking-down of a shock absorber which occurs when getting on a vehicle by the hydraulic sensor attached to the shock absorber and from an increase in the vehicle weight from the hydraulic pressure.

In addition, as the "drive system change-actuation judging means," anything may be used which, when an increase in the vehicle weight detected by the vehicle weight detecting means is above a certain amount actuates the drive system changing device; and when the increment of the vehicle weight detected by the vehicle weight detecting means is below a certain amount does not to actuate the drive system changing device. Such a judgment can be performed by the "electronic controller", including a program executable by the electronic controller and described in detail later. Accordingly, the drive system change-actuation judging means is arranged to detect/judge a difference between the prescribed weight and one in running from a dry weight of a vehicle described in the vehicle inspection certificate or the like by the vehicle weight detecting means and drive system changing device. For example, when the vehicle weight increases over 250 kg, this may be judged to be above the limit ; alternatively or additionally when the vehicle weight exceeds 1.3 times the dry weight of the vehicle, this may be judged to be above the limit. When judged above the limit as such a judgment to change the drive system in the emergency operations according to the invention can be performed, and when the increment of the vehicle weight is detected as below the above limits another judgment not to change the drive system according to the invention can be performed.

Here, as the "program" used for the drive system changing device, any program may be used which can realize to temporarily change a running system to the FR and/or FF systems from the 4WD system in the emergency operations, based on information obtained from the vehicle speed detecting means, the deceleration detecting means, and the steering angle detecting means. Meanwhile, a program language composing such the program is not specifically limited, and any language used for a usual program such as an assembler, FORTRAN, COBOL, BASIC, C/C++, Java (R), Java (R) Script, and Perl is available.

As a recording medium to record the program described above, any suitable medium may be used, including a semiconductor device.

Here, in the drive system changing device, as the "electronic controller" including the program executable by the electronic controller, anything may be used which can acquire each data such as the vehicle weight increment, vehicle speed, deceleration, and steering angle obtained from the above; perform a computation according to the program; and perform each the judgment: in particular it may be a microcomputer or the like .

Meanwhile, in the electronic controller which can execute the program recorded in the program for the drive system changing device, positions of the gravity center, roll center, and the like may be calculated from the vehicle weight, acceleration, speed, deceleration, and the like, and moreover considering results such as the positions of the gravity center and roll center, the presence or absence of a driving force change may be judged.

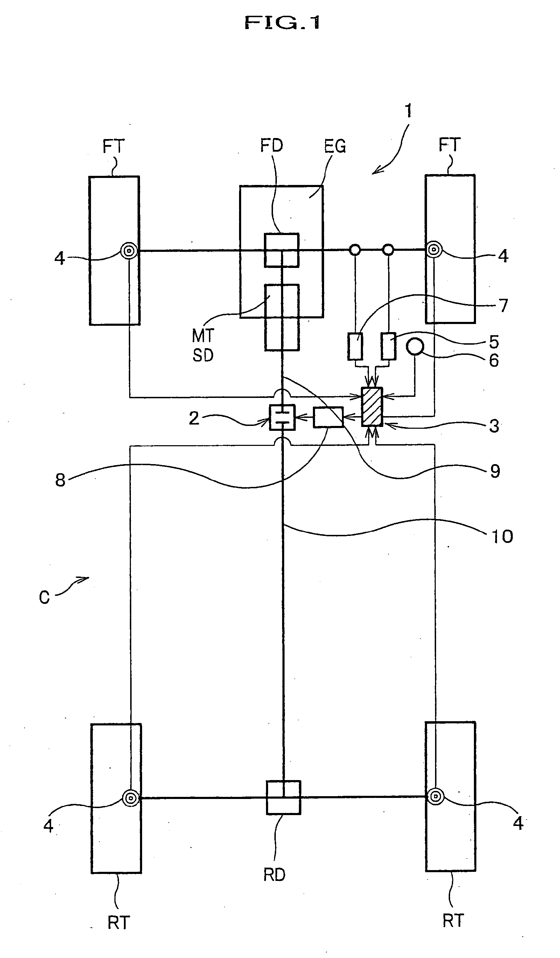

Next, one of embodiments related to the invention will be described in detail, referring to an illustration of the drive system changing device shown in FIG. 1.

Firstly, in the full-time 4WD system shown in FIG. 1, a vehicle C detects increase in the vehicle weight according to passengers and the weight of cargo on board by the vehicle weight detector 4, attached as the vehicle weight detecting means to a shock absorber, and the detector 4 outputs this data to the electronic controller 3 as the judgment means. In addition, in conjunction with the speedometer the vehicle speed is detected as necessary by the vehicle speed detector 5 as the vehicle speed detecting means, and the detector 5 likewise outputs such data to the electronic controller 3 as the judgment means. In the embodiment the deceleration detector 6 is disposed as the deceleration detecting means and is a G sensor, which can detect the deceleration in a sudden braking, and likewise outputs such data to the electronic controller 3. In addition, in cooperation with the steering wheel, a steering angle detector 7 detecting the steering angle of tyres is provided, which detects the steering angle of the tyres, and likewise outputs such data as above to the electronic controller 3. The electronic controller 3 as the judgment means judges whether or not to change the drive system according to each of the data of the vehicle weight increment, vehicle speed, deceleration, and steering angle. The electronic controller 3 is an electronic controller which has a program for the drive system changing device not shown in the drawing, and based on information (information whether or not to change the drive system in emergency operations from a relationship between the deceleration and steering angle) recorded in such program in advance, can execute the program of drive system change. And as a result of the above judgment, when it is judged that the drive system needs to be changed, according to the program the electronic controller 3 transmits a signal to actuate the driving force separating device 2 to the hydraulic unit 8; actuates the hydraulic unit 8; and thereby separates the front drive shaft from the rear drive shaft with a clutch being the driving force separating device 2, thereby being able to cut the driving force from the rear wheels in an instant and to make a running state with only the two front wheels being driven. Meanwhile, after the emergency operation, according to the program, the electronic controller 3 transmits a signal to return the drive system to the hydraulic unit 8, in order to actuate the driving force separating device 2 as the drive system returning means; actuates the driving force separating device 2; and again connects the clutch, thereby being able to return the two wheel drive systems of the front and rear to the 4WD system.

In FIG. 1, "FT" represents a front tyre; "RT", a rear tyre; "FD", a front differential; "SD", a center differential; "RD", a rear differential; "MT", a transmission; and "EG", an engine, respectively.

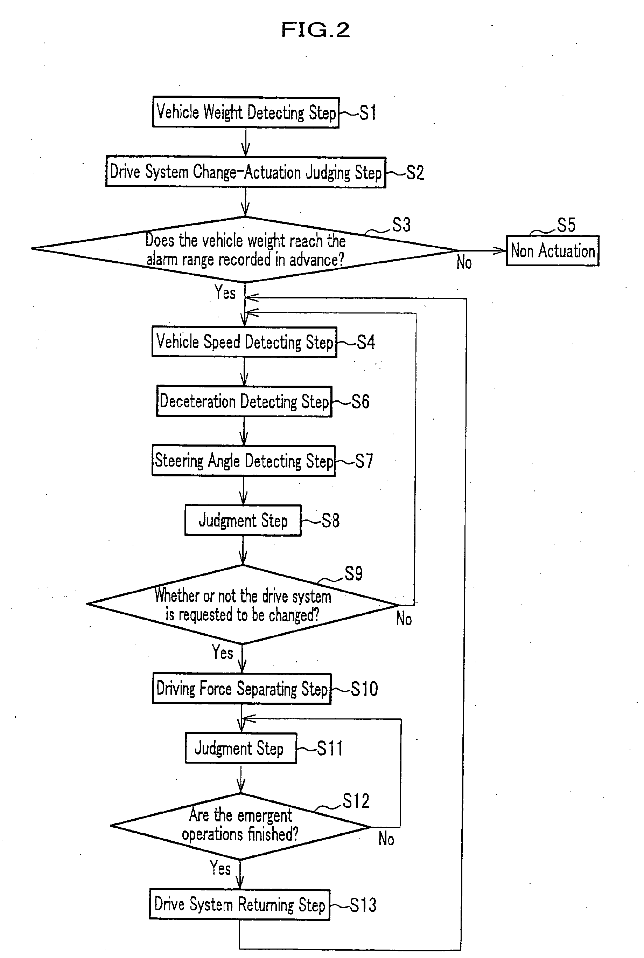

Next, referring to a flowchart shown in FIG. 2, the drive system changing method related to the invention is described. In FIG. 2 a vehicle weight detecting step (S1) and drive system change-actuation judging step (S2) are included, the drive system changing method firstly detects the increment of the vehicle weight due to passengers and a weight of cargo on board by the vehicle weight detecting step (S1). Then, the system judges "whether or not the vehicle weight reaches an alarm range recorded in advance" (S3) by the drive system change-actuation judging step (S2), and when judged to be lighter than that amount (No), does not move on to steps after the drive system change-actuation judging step (S2) and instead causes non actuation (S5), and thus the drive system changing method of the invention is not performed. On the other hand, when judged to be heavier (Yes), the vehicle speed is detected as necessary by a vehicle speed detecting step (S4). However, when the vehicle weight detecting step (S1) and drive system change-actuation judging step (S2) are not used, the program related to the invention is assumed to start from the vehicle speed detecting step (S4).

The method detects deceleration due to a sudden braking in emergency operations by a deceleration detecting step (S6), additionally detects a steering angle of the front tyres simultaneously by a steering angle detecting step (S7), performs a computation based on information recorded in advance from a relationship between the deceleration and steering angle, and judges whether or not a state of the front tyres reaches the alarm range in a judgment step (S8) preferred by the electronic controller. Judging from a judgment result by the judgment step (S8) "whether or not the drive system is requested to be changed," (S9) when the drive system is not requested to be changed (No), the system/method continues monitoring the vehicle state again, looping to the vehicle speed detecting step (S4). On the other hand, when judged that the drive system is needed to be changed (Yes), the system actuates a driving force separating step (S10) and changes the vehicle running with the 4WD system to a system driving the two wheels of the front or rear wheels. In a judgment step (S11) performed by the electronic controller, the method judges "whether or not the emergency operations are finished," (S12) and when it is judged that the emergency operations are finished, (Yes), returns the drive system to the 4WD system by a drive system returning step (S13), and again after that, continues monitoring the state of the front tyres, looping to the vehicle speed detecting step (S4). On the other hand, when judged that the emergency operations are not finished (No), the method continues to test this until the finish of the emergency operations by looping to the judgment step (S11) until the emergent operations are finished.

Although the drive system changing method is described as a method in which the vehicle speed detecting step (S4), the deceleration detecting step (S6), and the steering angle detecting step (S7) are sequentially processed, it goes without saying that these processes may be parallel and concurrently processed.

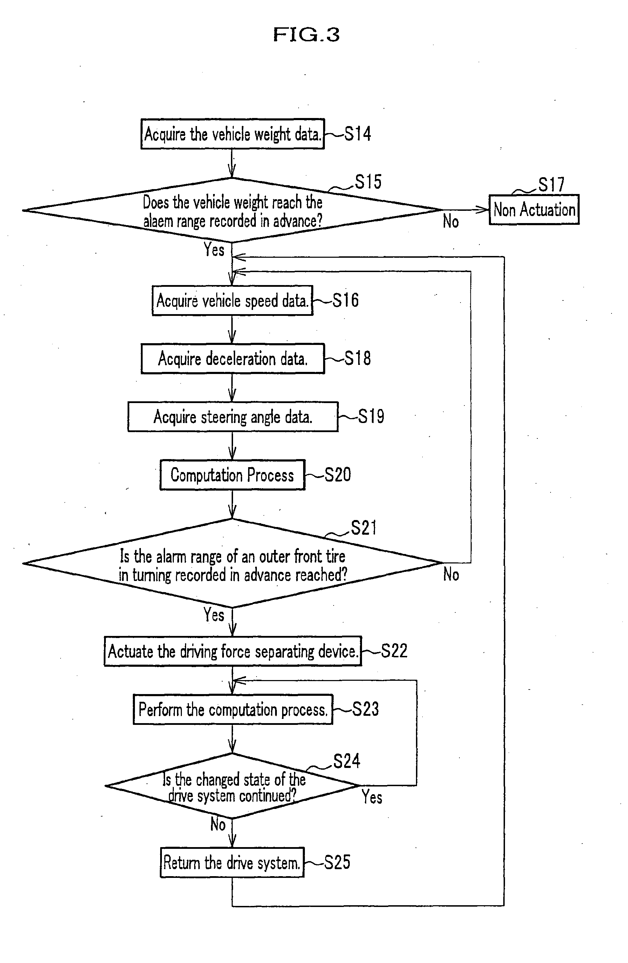

In addition, the program is described referring to a flowchart shown in FIG. 3. FIG. 3 includes a program relating to the vehicle speed detecting means and drive system change-actuation judging means. When the program is executed, the electronic controller acquires vehicle weight data from the vehicle weight detecting means (S14). Then, the program judges from the acquired vehicle weight data "whether or not the vehicle weight reaches the alarm range recorded in advance" (S15) by a computation, and when the increase in the vehicle weight is less than that range, the program makes the electronic controller transmit a signal to cause "non actuation" (S17) of the driving force separating device. On the other hand, when the increment of the vehicle weight is more than that range, the program makes the electronic controller acquire vehicle speed data from the vehicle speed detecting means (S16), makes it acquire deceleration data during sudden braking (S18), and also makes it acquire sudden steering angle data at the same time (S19). The program makes the electronic controller perform a computation based on each of the acquired data (S20), makes it judge "whether or not an alarm range of an outer front tire in turning recorded in advance is reached" (S21), and when the alarm range is reached (Yes), makes it transmit a signal to actuate the driving force separating device related to the invention (S22). On the other hand, when the alarm range is not reached (No), the program does not make the electronic controller transmit a signal to change the drive system and again makes it acquire data such as the vehicle speed (S16 to S19). When actuating the driving force separating device (S22), the program makes the electronic controller perform a computation (S23), makes it judge "whether or not continue a changed state of the drive system" (S24), and when judged that continuing is requested (Yes), makes it continuously maintain the changed state and repeat the computation (S23) until the state is not requested. On the other hand, when judged that continuing is not requested (No), the program makes the electronic controller return the drive system to the 4WD system and again acquire the vehicle speed data and the like (S16 to S19). Meanwhile, although the above program is described as a program making the electronic controller acquire the vehicle data (S16), acquire the deceleration data (S18), and acquire the steering angle data (S18) as sequentially processed, it goes without saying that these processes may be parallel and concurrently processed.

**Claims**

1. A drive system changing device (1) actuated in an emergency operation, the device comprising:

   a vehicle speed detecting means (5) for detecting a vehicle speed before a start of deceleration;
   a deceleration detecting means (6) for detecting a negative acceleration due to a sudden braking;
   a steering angle detecting means (7) for detecting a steering angle when a sudden steering operation is performed in the sudden braking;
   a determination means (3) for determining whether or not to change a drive system from a result obtained from each of said vehicle speed detecting means (5), said deceleration detecting means (6), and said steering angle detecting means (7);
   a driving force separating means (2) for changing a four wheel drive system to a front wheel drive system or a rear wheel drive system by separating a part of a driving force transmitting unit of the four wheel drive system according to a determination of said determination means (3); and
   a drive system returning means (2) for returning the drive system changed to the front wheel drive system or the rear wheel drive system after the emergency operation by said driving force separating means to the four wheel drive system.

2. A drive system changing device (1) according to claim 1, wherein said determination means (3) is controlled by an electronic controller.

3. A drive system changing device (1) according to claim 1 or claim 2, the device further having:

   a vehicle weight detecting means (4) for detecting a difference between a prescribed vehicle weight and a vehicle weight in running; and
   a drive system change-actuation judging means for actuating said drive system changing device only when an increase in the vehicle weight detected by said vehicle weight detecting means is more than a certain amount.

4. A drive system changing (1) device according to claim 3, wherein said drive system change-actuation judging means is controlled by an electronic controller.

5. A drive system changing method which is actuated in an emergency operation, the method comprising:

   a vehicle speed detecting step, detecting a vehicle speed before a start of deceleration;
   a deceleration detecting step, detecting a negative acceleration due to a sudden braking;
   a steering angle detecting step, detecting a steering angle when a sudden steering operation is performed in the sudden braking;
   a determination step, determining whether or not to change a drive system from a result obtained from each step of said vehicle speed detecting step, said deceleration detecting step, and said steering angle detecting step;
   a driving force separating step, changing a four wheel drive system to a front wheel drive system or a rear wheel drive system by separating a part of a driving force transmitting unit of the four wheel drive system according to a determination of said determination step; and
   a drive system returning step, returning the drive system changed to the front wheel drive system or the rear wheel drive system after the emergency operation by said driving force separating step to the four wheel drive system.

**6.** A drive system changing method according to claim 5, the method further comprising:

a vehicle weight detecting step, detecting a difference between a prescribed vehicle weight and a vehicle weight in running; and wherein only when an increase in the vehicle weight detected by said vehicle weight detecting step is above a certain amount does said determination step to determine whether or not to change a drive system from a result obtained from each step of said vehicle speed detecting step, said deceleration detecting step, and said steering angle detecting step occur.

**7.** A program executable by an electronic controller according to claim 2 controlling a drive system changing device, the program making the electronic controller:

monitor a vehicle speed as necessary by acquiring detected and output data from said vehicle speed detecting means; monitor deceleration in sudden braking by acquiring detected and output data from said deceleration detecting means; monitor a steering angle detecting means by acquiring detected and output data from said steering angle detecting means; perform a computation as to whether or not an alarm range recorded in advance is reached based on each data monitored by said deceleration detecting means and said steering angle detecting means; actuate said driving force separating device when as a computation result, a state of the front tyres due to an emergency operation is judged to be in the alarm range recorded in advance, and transmit a signal to change a four wheel drive system to a two wheel drive system; and actuate said driving force separating device again after the emergency operation, and transmit a signal to return the two wheel drive system to the four wheel drive system.

**8.** A program executable by an electronic controller according to claim 4 for controlling a drive system changing device, the program further making the electronic controller:

judge whether or not an increase in a vehicle weight reaches an alarm range recorded in advance by acquiring data detected by said vehicle weight detecting means; and transmit a signal to actuate said driving force separating device when the increase in the vehicle weight reaches the alarm range recorded in advance.

# FIG.1

## FIG.2

Vehicle Weight Detecting Step —S1

Drive System Change-Actuation Judging Step —S2

Does the vehicle weight reach the alarm range recorded in advance? —S3

No → Non Actuation —S5

Yes

Vehicle Speed Detecting Step —S4

Deceteration Detecting Step —S6

Steering Angle Detecting Step —S7

Judgment Step —S8

Whether or not the drive system is requested to be changed? —S9

No

Yes

Driving Force Separating Step —S10

Judgment Step —S11

Are the emergent operations finished? —S12

No

Yes

Drive System Returning Step —S13

# FIG.3

Acquire the vehicle weight data. —S14

Does the vehicle weight reach the alaem range recorded in advance? —S15 → No → Non Actuation —S17

Yes

Acquire vehicle speed data. —S16

Acquire deceleration data. —S18

Acquire steering angle data. —S19

Computation Process —S20

Is the alarm range of an outer front tire in turning recorded in advance reached? —S21 → No

Yes

Actuate the driving force separating device. —S22

Perform the computation process. —S23

Is the changed state of the drive system continued? —S24 → Yes

No

Return the drive system. —S25

## FIG.4A   FIG.4B   FIG.4C

## FIG.5

# FIG.6

SW

Lateral Force